(19) Europäisches Patentamt
European Patent Office
Office européen des brevets

(11) EP 3 906 510 B1

(12) EUROPEAN PATENT SPECIFICATION

(45) Date of publication and mention of the grant of the patent:
**30.09.2026 Bulletin 2026/40**

(21) Application number: **20711435.6**

(22) Date of filing: **14.02.2020**

(51) International Patent Classification (IPC):
***G06N 10/20*** *(2022.01)* *G06N 10/40* *(2022.01)*
*G06N 5/01* *(2023.01)*

(52) Cooperative Patent Classification (CPC):
**G06N 10/20;** G06N 5/01; G06N 10/40

(86) International application number:
**PCT/US2020/018387**

(87) International publication number:
**WO 2020/168257 (20.08.2020 Gazette 2020/34)**

(54) **INCREASING REPRESENTATION ACCURACY OF QUANTUM SIMULATIONS WITHOUT ADDITIONAL QUANTUM RESOURCES**

ERHÖHUNG DER ABBILDUNGSGENAUIGKEIT VON QUANTENSIMULATIONEN OHNE ZUSÄTZLICHE QUANTENRESSOURCEN

AUGMENTATION DE LA PRÉCISION DE REPRÉSENTATION DE SIMULATIONS QUANTIQUES SANS RESSOURCES QUANTIQUES SUPPLÉMENTAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2019 US 201962806498 P**

(43) Date of publication of application:
**10.11.2021 Bulletin 2021/45**

(60) Divisional application:
**26199445.3 / 4 814 805**

(73) Proprietor: **Google LLC**
**Mountain View, CA 94043 (US)**

(72) Inventors:
- **JIANG, Zhang**
  **Mountain View, California 94043 (US)**
- **BABBUSH, Ryan**
  **Mountain View, California 94043 (US)**
- **MCCLEAN, Jarrod Ryan**
  **Mountain View, California 94043 (US)**
- **RUBIN, Nicholas Charles**
  **Mountain View, California 94043 (US)**

(74) Representative: **Varley, James Richard et al**
**Venner Shipley LLP**
**TIDE Bankside**
**8 Emerson Street**
**London SE1 9DU (GB)**

(56) References cited:
- **J. R. MCCLEAN ET AL: "Hybrid quantum-classical hierarchy for mitigation of decoherence and determination of excited states", PHYSICAL REVIEW A, vol. 95, 042308, 6 April 2017 (2017-04-06), XP055462906, DOI: 10.1103/PhysRevA.95.042308**
- **J. I. COLLESS ET AL: "Computation of molecular spectra on a quantum processor with an error-resilient algorithm", PHYSICAL REVIEW X, vol. 8, 011021, 12 February 2018 (2018-02-12), XP055702613, DOI: 10.1103/PhysRevX.8.011021**
- **N. C. RUBIN: "A hybrid classical/quantum approach for large-scale studies of quantum systems with density matrix embedding theory", ARXIV:1610.06910V2, 24 October 2016 (2016-10-24), XP080816270, Retrieved from the Internet <URL:https://arxiv.org/abs/1610.06910v2> [retrieved on 20200529]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

- **M. REIHER ET AL: "Elucidating reaction mechanisms on quantum computers", PROCEEDINGS OF THE NATIONAL ACADEMY OF SCIENCES OF THE USA, vol. 114, no. 29, 18 July 2017 (2017-07-18), pages 7555 - 7560, XP055702612, DOI: 10.1073/pnas.1619152114**
- **Y. CAO ET AL, ARXIV:1812.09976V2, 28 December 2018 (2018-12-28), XP055702614, Retrieved from the Internet <URL:https://arxiv.org/abs/1812.09976v2> [retrieved on 20200529]**

## Description

BACKGROUND

This specification relates to quantum computing.

Applications of quantum computing include quantum simulation. The simulation of quantum systems has applications in a variety of different areas ranging from pharmaceutical synthesis to the design of novel catalysts and materials. However, simulating complex quantum systems using classical techniques is untenable due to the exponential scaling of required resources as a function of system size N. Quantum computers and quantum simulation techniques offer potential solutions to this task.

"Hybrid Quantum-Classical Hierarchy for Mitigation of Decoherence and Determination of Excited States" (J. R. McClean et al., PRA, vol. 95, art. 042308, 2017) discloses a variational quantum eigensolver built to utilize quantum resources for the solution of eigenvalue problems and optimizations with minimal coherence time requirements by leveraging classical computational resources. Evidence for the conjecture that variational approaches can automatically suppress even non-systematic decoherence errors is provided by introducing an exactly solvable channel model of variational state preparation. It is demonstrated numerically on a sample electronic system that this method both allows for the accurate determination of excited electronic states as well as reduces the impact of decoherence, without using any additional quantum coherence time or formal error correction codes.

"Computation of Molecular Spectra on a Quantum Processor with an Error-Resilient Algorithm" (J. I. Colless et al., PRX, vol. 8, art. 011021, 2018) discloses a superconducting-qubit-based processor that applies the quantum subspace expansion approach to the $H_2$ molecule, extracting both ground and excited states without the need for auxiliary qubits or additional minimization.

SUMMARY

This specification describes methods and systems for increasing the representation accuracy of quantum simulations of quantum systems without requiring additional quantum computing resources, e.g., additional qubits, increased gate complexity or increased circuit depth.

In general, one innovative aspect of the subject matter described in this specification can be implemented in a method for method for simulating a physical system characterized by an electronic structure Hamiltonian, comprising: selecting, by one or more classical processors, a first set of basis functions for the simulation, wherein the first set of basis functions comprises an active set of orbitals, and a virtual set of orbitals, wherein the virtual set of orbitals are higher in energy than the active set of orbitals; defining, by the one or more classical processors, a set of expansion operators for the simulation, wherein expansion operators in the set of expansion operators approximate fermionic excitations in an active space spanned by the active set of orbitals and a virtual space spanned by the virtual set of orbitals; performing multiple quantum computations to determine: a matrix representation of the electronic structure Hamiltonian in a second set of basis functions, wherein each basis function in the second set of basis functions comprises a respective expansion operator applied to a wavefunction prepared in the active space, and an overlap matrix in the second set of basis functions, wherein each element of the overlap matrix represents a respective overlap of two basis functions in the second set of basis functions; wherein determining the matrix representation of the electronic structure Hamiltonian or the overlap matrix comprises, for one or more matrix elements: determining, by the one or more classical processors, that the matrix element comprises operators that act on the virtual space; performing, by the one or more classical processors, a classical computation to contract the matrix element to a matrix element comprising operators that act on the active space only by applying Wick’s theorem; measuring the operators that act on the active space only to determine a value for the matrix element; computing, , by the one or more classical processors and using the determined matrix representation of the electronic structure Hamiltonian in the second set of basis functions and the determined overlap matrix, eigenvalues and eigenvectors of the electronic structure Hamiltonian; and determining, by the one or more classical processors, physical properties of the physical system using the computed eigenvalues and eigenvectors.

Other implementations of these aspects includes corresponding computer systems, apparatus, and computer programs recorded on one or more computer storage devices, each configured to perform the actions of the methods. A system of one or more classical and/or quantum computers can be configured to perform particular operations or actions by virtue of having software, firmware, hardware, or a combination thereof installed on the system that in operation causes or cause the system to perform the actions. One or more computer programs can be configured to perform particular operations or actions by virtue of including instructions that, when executed by data processing apparatus, cause the apparatus to perform the actions.

The foregoing and other implementations can each optionally include one or more of the following features, alone or in combination. In some implementations measuring operators that act on the active space only to determine a value for the matrix element comprises: preparing the wavefunction in the active space; and measuring a Pauli operator

corresponding to a qubit transformation of the matrix element.

In some implementations the method further comprises, before computing eigenvalues and eigenvectors of the electronic structure Hamiltonian: computing eigenvalues and eigenvectors of the determined overlap matrix; removing eigenvalues of the determined overlap matrix that are equal to zero or smaller than a predetermined threshold to define an updated overlap matrix; and using the updated overlap matrix to compute the eigenvalues and eigenvectors of the electronic structure Hamiltonian.

In some implementations the first set of basis functions further comprises a core set of orbitals.

In some implementations defining a set of expansion operators for the simulation further comprises selecting a maximum excitation level for the set of expansion operators.

In some implementations the active space comprises a subspace of total active space that is excited into the virtual space.

In some implementations measuring the operators that act on the active space only to determine a value for the matrix element comprises: approximating the operators that act on the active space only using cumulant approximations or ensemble variational methods; and measuring the approximated operators that act on the active space only.

In some implementations the electronic structure Hamiltonian characterizes the electronic structure of a semiconductor, and wherein simulating the physical system comprises simulating properties of the semiconductor. Properties of the semiconductor may comprise conductivity or resistance.

The subject matter described in this specification can be implemented in particular ways so as to realize one or more of the following advantages.

Applications of quantum computing for quantum chemistry typically focus on the solutions of hard problems within a reduced space, called the active space. Restricting to the active space enables the number of qubits required to solve parts (e.g., essential parts) of hard chemistry problems to be reduced. However, this reduction is not exact. While the essential physics of the problem may be captured, important effects such as electronic cusps that make quantitative accuracy difficult to achieve are neglected. Computation and/or simulation results can therefore be inaccurate.

To capture these additional important effects additional basis functions - which can translate to additional qubits and increased quantum gate complexity during the physical implementation of the quantum simulations - are required. In most applications, the number of additional basis functions/qubits can be very large. Therefore, determining accurate solutions to such problems can be extremely difficult and costly - particularly when using near- or intermediate-term quantum computers, e.g., noisy intermediate-scale quantum (NISQ) devices with numbers of qubits ranging from tens to hundreds.

The present specification introduces quantum simulation techniques that extend beyond the active space without requiring additional qubits or quantum gate complexity. Accordingly, quantum simulations performed using the presently described techniques reintroduce important physical effects and can achieve improved simulation accuracy. The methods achieve an exponential advantage over their classical counterparts in the treatment of the active space and active-space reference. In addition, optional approximations that can be implemented to increase the efficiency of the quantum simulation scheme are introduced. These optional approximations can reduce the number of measurement operations required by the quantum simulation scheme, thus decreasing the amount of quantum computational resources used in the quantum simulation.

The presently described techniques are particularly suitable for performing quantitatively accurate calculations for chemical systems on near-term or intermediate-term quantum computers. In the long term, the techniques may also be used for the competitiveness of fault-tolerant approaches to simulating quantum systems, e.g., chemical systems. By determining matrix elements and overlap matrices in the active space using the quantum computing device, and using a classical computing device to perform pre-computation and/or post processing to determine physical properties of the system from the matrix elements and overlap matrices, the method is effectively optimized to run on a hybrid quantum-classical computing device.

The details of one or more implementations of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 depicts an example system for simulating a physical system.
FIG. 2 is a flow diagram of an example process for simulating a physical system using quantum subspace expansion.
FIG. 3 is a schematic diagram of quantum subspace expansion for quantum simulation of a quantum system.
FIG. 4 is a flow diagram of an example process, not covered by the claims, for simulating a physical system using full space orbital relaxation.

Like reference numbers and designations in the various drawings indicate like elements.

DETAILED DESCRIPTION

*Overview*

This specification describes techniques for simulating quantum systems, e.g., systems characterized by the electronic structure Hamiltonian. When simulating a quantum system, a discretization of space (or basis set) can be selected to represent the quantum system. The blocks used to divide space are called basis functions, and a number of canonical choices of bases are known, e.g., linear combinations of atomic orbitals and plane waves. Once the basis is selected, the Hamiltonian that characterizes the quantum system can be expressed using the selected basis. For example, the electronic structure Hamiltonian can be written in its canonical form as

$$H = \sum_{ij} h_{ij} a_i^\dagger a_j + \frac{1}{2} \sum_{i,j,k,l} h_{ijkl} a_i^\dagger a_j^\dagger a_k a_l \qquad (1)$$

where each index *i, j, k, l* corresponds to one basis function in the chosen basis, $h_{ij}$ and $h_{ijkl}$ represent standard integrals over the involved basis functions, and the ladder operators $a^\dagger$, $a$ satisfy the canonical fermionic anti-commutation relations $\{a_i^\dagger, a_j\} = \delta_{ij}, \{a_i, a_j\} = \{a_i^\dagger, a_j^\dagger\} = 0$ .

The accuracy that can be achieved for a simulation of a quantum system is dependent on the number of basis functions in the selected basis. That is, generally, increasing the number of basis functions increases the accuracy of the simulation. However, using too many basis functions can make the simulation task impractical or can be wasteful of resources when more insightful treatments may instead be used.

One method that was first used in traditional quantum chemistry and has been adopted by the quantum computing community is the active space approximation. The physical intuition behind the active space approximation is that the discretized space may be divided into a portion which exhibits strong correlations or entanglement - the active space - and a portion that while important, exhibits only low rank contributions that can be well treated perturbatively - the virtual space. However, the size of the essential quantum component or active space remains limited on a classical computer, and to date the contributions of virtuals have remained absent on a quantum computer.

This specification describes quantum simulation techniques and systems that extend beyond the active space approximation without requiring additional qubits or gate complexity. One example technique includes leveraging quantum subspace expansion to reintroduce contributions from the virtual space in a systematic manner to improve simulation accuracy. Another example technique uses orbital relaxations to remove the active-space approximation and reduce circuit depth.

*Example hardware*

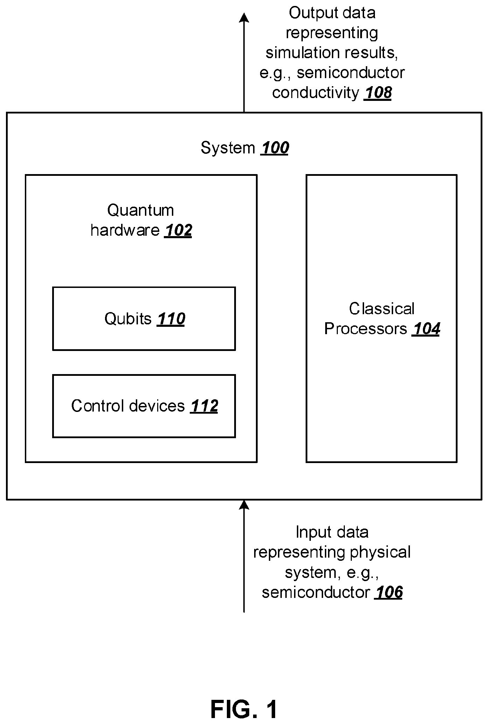

FIG. 1 depicts an example system 100 for simulating a quantum system. The example system 100 is an example of a system implemented as classical and quantum computer programs on one or more classical computers and quantum computing devices in one or more locations, in which the systems, components, and techniques described in this specification can be implemented.

The system 100 may receive as input data specifying a physical system that is to be modeled or simulated, e.g., input data 106. For example, the received data may represent a material, e.g., a metal or polymer, a single molecule or a chemical. The input data may include data representing a Hamiltonian characterizing the physical system that is to be modeled or simulated, e.g., an electronic structure Hamiltonian.

The system 100 may generate as output data representing results of a simulation of the physical system of interest, e.g., output data 108. The generated output data may be provided for further processing or analyzing. For example, in cases where the physical system is a material, e.g., a metal or polymer, the generated output data may include data representing a simulated ground state of the physical system that may be used to determine properties of the material, e.g., its resistance or conductivity. As another example, in cases where the physical system is a chemical, the generated output data may be used to determine properties of the chemical, e.g., a rate of a chemical reaction.

The system 100 includes quantum hardware 102 in data communication with a classical processor 104. For convenience, the classical processor 104 and quantum computing hardware 102 are illustrated as separate entities, however in some implementations the classical processor 104 can be included in quantum computing hardware 102, e.g., the quantum computing hardware 102 can include one or more components for performing classical computing operations.

The quantum hardware 102 includes components for performing quantum computation, e.g., the quantum simulation procedures described in this specification. For example, the quantum hardware 102 includes multiple qubits 110 and control devices 112 for controlling the qubits 110 and causing algorithmic operations or quantum computations to be performed.

The multiple qubits 110 are physical qubits used to perform algorithmic operations or quantum computations. The specific physical realization of the qubits 110 included in the quantum computing hardware 102 and how they interact with one another is dependent on a variety of factors including the type of quantum computations that the quantum computing hardware 102 is performing (which in tum can depend on the physical system being simulated). For example, in some implementations the qubits may include qubits that are physically realized via atomic, molecular or solid-state quantum systems. In other implementations the qubits may include superconducting qubits, e.g., Gmon qubits, or semi-conducting qubits. In other implementations ion traps, photonic devices or superconducting cavities (with which states may be prepared without requiring qubits) may be used. Further examples of physical realizations of qubits include fluxmon qubits, silicon quantum dots or phosphorus impurity qubits.

The type of control devices 112 included in the quantum hardware 102 depends on the type of qubits 110 included in the quantum hardware 102. For example, in some cases the qubits 110 can be frequency tunable. In these cases, each qubit may have associated operating frequencies that can be adjusted using one or more control devices 112, e.g., an excitation pulse generator and control lines that couple the qubits to the excitation pulse generator. Example operating frequencies include qubit idling frequencies, qubit interaction frequencies, and qubit readout frequencies. Different frequencies correspond to different operations that the qubit can perform. For example, setting the operating frequency to a corresponding idling frequency may put the qubit into a state where it does not strongly interact with other qubits, and where it may be used to perform single-qubit gates. As another example, in cases where qubits interact via couplers with fixed coupling, qubits can be configured to interact with one another by setting their respective operating frequencies at some gate-dependent frequency detuning from their common interaction frequency. In other cases, e.g., when the qubits interact via tunable couplers, qubits can be configured to interact with one another by setting the parameters of their respective couplers to enable interactions between the qubits and then by setting the qubit's respective operating frequencies at some gate-dependent frequency detuning from their common interaction frequency. Such interactions may be performed in order to perform multi-qubit gates.

The control devices 112 may further include devices, e.g., readout resonators, that are configured to perform measurements on the qubits 110 and provide measurement results to the classical processors 104 for processing and analyzing.

The classical processor 204 includes components for performing classical computation, e.g., the classical post-processing procedures described in this specification.

*Programming the hardware: an example process for simulating a quantum system using quantum subspace expansion*

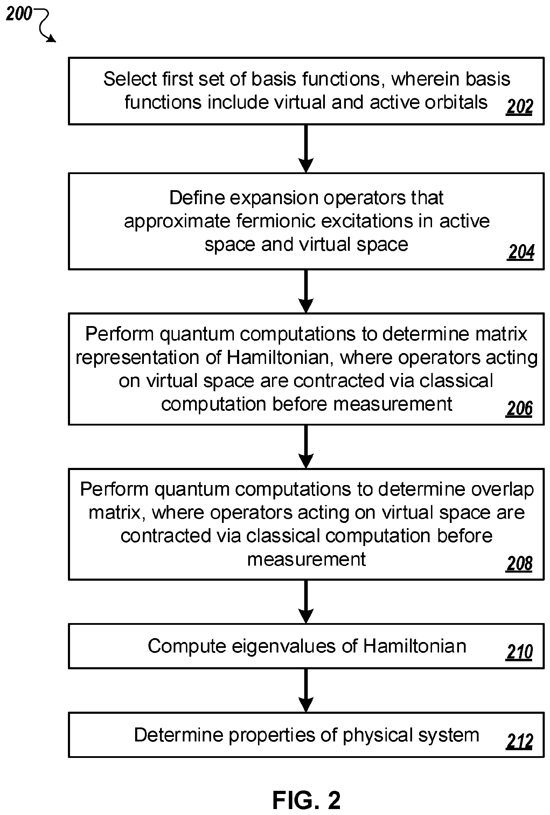

FIG. 2 is a flow diagram of an example process 200 for simulating a quantum system characterized by a respective Hamiltonian using quantum subspace expansion. For convenience, the process 200 will be described as being performed by a system of one or more classical and quantum computing devices located in one or more locations. For example, a quantum computation system, e.g., the system 100 of FIG. 1, appropriately programmed in accordance with this specification, can perform the process 200.

The system selects a first set of basis functions for the simulation (step 202). The system may then define the Hamiltonian using the selected first set of basis functions. For example, as described above, in some cases the Hamiltonian may be an electronic structure Hamiltonian. In these cases the electronic structure Hamiltonian can be written in the canonical form given by Equation (1) above where each index value for $i, j, k, l$ in Equation (1) corresponds to a respective basis function.

The first set of basis functions includes a set of core orbitals C, active orbitals $\mathcal{A}$ and virtual orbitals $\mathcal{V}$. In typical quantum chemistry calculations on quantum computers (i.e., calculations different to those described in this specification), the core orbitals are assumed to be doubly occupied and their contributions are integrated out to an effective field felt by the active space and virtual space. In these typical quantum chemistry calculations, virtual orbitals are ignored, and the problem is solved exactly within the active space, $\mathcal{A}$.

The system can determine which elements of the first set of basis functions belong in each subset $\mathcal{C}$, $\mathcal{A}$ or $\mathcal{V}$ by performing a classical pre-computation. For example, the system can perform a mean-field calculation such as Hartree-Fock on the quantum system of interest. Performing such a calculation produces a set of new orbitals built from the original that is well-ordered in terms of energy. The lowest orbitals in energy are unlikely to participate in bonding and are labeled or designated as the core orbitals. The orbitals closest in energy to the highest occupied orbital can then be labelled or designated as the active orbitals in the active space. The remaining orbitals are labelled or designated as virtual orbitals. In

some cases this classical pre-computation can be enhanced by going beyond the mean-field level, and instead ordering by occupation in natural orbitals. In addition, the classical pre-computation can be further refined by considering orbital entanglement approximately in a method such as the density matrix renormalization group.

The system defines a set of expansion operators $O_i$ (step 204). The expansion operators include operators that approximate fermionic excitations on the active space $\mathcal{A}$ (the space spanned by the set of active orbitals) and virtual space $\mathcal{V}$ (the space spanned by the set of virtual orbitals). For example, the set of expansion operators can be given by Equation (2) below.

$$O_i \in \{a_i^\dagger a_p, a_\mu^\dagger a_q a_\nu^\dagger a_r \mid i \in \mathcal{A} \cup \mathcal{V};\ p,q,r \in \mathcal{A};\ \mu,\nu \in \mathcal{V}\} \qquad (2)$$

In Equation (2), $a^\dagger$, $a$ represent fermionic annihilation and creation operators. The number of expansion operators in the defined set is determined by the number of original basis functions, in combinations with which have been labeled as core, active, or virtual by the classical pre-step described above. If the indices in Equation (2) are counted for the size of $\mathcal{A} \cup \mathcal{V}$, $\mathcal{A}$, and $\mathcal{V}$ the number of expansion operators in the defined set can be determined exactly from these set sizes and the fact that terms with 2 indices and 4 indices are drawn from the sets selectively.

The system performs multiple quantum computations to determine a matrix representation of a target operator (corresponding to a target observable for the simulation) in a second set of basis functions (step 206). For convenience, the below description continues using the example of the electronic structure Hamiltonian as the target operator (where energy is the target observable), however other target operators and observables may be used (depending on the simulation being performed). The calculation of such matrix elements by a classical computational device is typically highly computationally costly, especially for states that exhibit strong correlations and/or entanglement. By contrast, the use of quantum computation to determine the matrix elements inherently takes the strong correlations and/or entanglement into account.

Each basis function in the second set of basis functions is defined via application of a respective expansion operator $O_i$ to a reference wavefunction $|\Psi_{\text{ref}}\rangle$ which can be (efficiently) prepared within the active space $\mathcal{A}$. That is, the second set of basis functions may be given by $\{O_i|\Psi_{\text{ref}}\rangle\}$. The matrix representation of the electronic structure Hamiltonian H is determined through measurement operations and have matrix elements given by Equation (3) below.

$$H_{ij} = \langle \Psi_{\text{ref}} | O_i^\dagger H O_j | \Psi_{\text{ref}} \rangle \qquad (3)$$

To determine each matrix element $H_{ij}$, the system can repeatedly prepare the wavefunction $|\Psi_{\text{ref}}\rangle$ (by preparing qubits in the quantum computing device in a corresponding quantum state) and measure a Pauli operator corresponding to the transformation of the matrix element by a Jordan-Wigner or equivalent transformation. In some implementations more general measurement techniques can be used, e.g., phase estimation or ancilla assisted estimation.

In some implementations the second set of basis functions $\{O_i|\Psi_{\text{ref}}\rangle\}$ may be non-orthogonal. In these implementations the system can further determine an overlap (or metric) matrix S in the second set of basis functions (to ensure that the problem is well defined) (step 208). Each element of the overlap matrix S represents a respective overlap of two basis functions in the set of basis functions. Each element may be formed through measurement operations and may be given by Equation (4) below.

$$S_{ij} = \langle \Psi_{ref} | O_i^\dagger O_j | \Psi_{ref} \rangle \qquad (4)$$

Again, to determine each matrix element $S_{ij}$, the system can repeatedly prepare the wavefunction $|\Psi_{\text{ref}}\rangle$ (by preparing qubits in the quantum computing device in a corresponding quantum state) and measure a Pauli operator corresponding to the transformation of the matrix element by a Jordan-Wigner or equivalent transformation.

The expansion operators defined in step 204 and Equation (2) above include expansion operators that act, in principle, on qubits that define the active space $\mathcal{A}$ and the virtual space V. However, by definition the wavefunction $|\Psi_{ref}\rangle$ has no components that act on the virtual space $\mathcal{V}$. Therefore, expansion operators that act on the virtual space are contracted using a classical pre-computation, applying Wick's theorem, on the Hamiltonian such that the quantum computation of each matrix element $H_{ij}$ and $S_{ij}$ can be performed in the active space only.

For example, in some implementations step 206 may include determining, through measurement, a matrix element given by Equation (5) below.

$$M = \langle \Psi_{\text{ref}} | a_\xi a_s^\dagger a_\eta a_r^\dagger a_i^\dagger a_j^\dagger a_k a_l a_\mu^\dagger a_p a_\nu^\dagger a_q | \Psi_{\text{ref}} \rangle \qquad (5)$$

In Equation (5), Greek letters represent virtual orbitals. Performing a classical pre-computation in this case includes contracting the operators on the virtual space in Equation (5) using Wick's theorem to obtain an alternative representation as given below in Equation (6).

$$M = \Delta_{\xi\eta,\mu\nu} \langle a_s^\dagger a_r^\dagger a_i^\dagger a_j^\dagger a_k a_l a_p a_q \rangle + \sum_{x=i,j} \sum_{v=l,k} (-1)^{\delta_{xj}+\delta_{yk}} \left( \delta_{\xi x} \Delta_{y\eta,\mu\nu} - \delta_{\eta x} \Delta_{y\xi,\mu\nu} \right) \langle a_s^\dagger a_r^\dagger a_{\bar{x}}^\dagger a_{\bar{y}} a_p a_q \rangle + \Delta_{\xi\eta,ij} \Delta_{kl,\mu\nu} \langle a_s^\dagger a_r^\dagger a_p a_q \rangle \qquad (6)$$

In Equation (6), $\Delta_{\xi\eta,\mu\nu} = \delta_{\xi\nu}\delta_{\eta\mu} - \delta_{\xi\mu}\delta_{\eta\nu}$, $\bar{x}(\bar{y})$ represents $x(y)$ changing to another value in the summation (e.g., $\bar{i} = j$ for $x$) and $\langle ... \rangle$ represents expectation values with respect to the wavefunction $|\Psi_{ref}\rangle$ in the active space. The term $\langle a_s^\dagger a_r^\dagger a_i^\dagger a_j^\dagger a_k a_l a_p a_q \rangle$ represents a 4 electron reduced density matrix (4-RDM), $\langle a_s^\dagger a_r^\dagger a_{\bar{x}}^\dagger a_{\bar{y}} a_p a_q \rangle$ represents a 3 electron density matrix (3-RDM), and $\langle a_s^\dagger a_r^\dagger a_p a_q \rangle$ represents a 2 electron density matrix (2-RDM).

The expansion operators defined in Equation (2) include single and double excitations with respect to the reference wavefunction $|\Psi_{\text{ref}}\rangle$ both within and outside the active space, as shown in Equation (2). However, in some implementations the excitation number may be varied to arbitrary levels either within or outside the active space, or subdivisions of it. That is, the system may select a maximum excitation level *k* for the set of expansion operators for arbitrary *k*. For *k* levels of excitation, the expected number of measurements included in process 200 will grow as $N_A^{(4+2k)}$. As this number is increased, the expected accuracy of both the ground state and approximations to excited states will increase, however the cost of measurement will as well.

The system uses the determined matrix representation of the electronic structure Hamiltonian *H* and the determined overlap matrix *S* to compute eigenvalues and eigenvectors of the electronic structure Hamiltonian (step 210). That is, the system may perform classical computations to solve the generalized eigenvalue problem given by Equation (7) below.

$$HC = SCE \qquad (7)$$

In Equation (7), *C* represents a matrix of eigenvectors in the basis $\{O_i|\Psi_{\text{ref}}\rangle\}$ and *E* represents a diagonal matrix of eigenvalues. In some implementations a preprocessing step such as canonical diagonalization can be performed to remove zero or near-zero eigenvalues of the matrix S and generate an updated overlap matrix S' before the generalized eigenvalue problem in the well-conditioned subspace is solved.

The system determines properties of the quantum system using the computed eigenvalues and eigenvectors (step 212). For example, in some cases the electronic structure Hamiltonian may characterize the electronic structure of a semiconductor. In these cases simulating the physical system may include simulating properties of the semiconductor, e.g., simulating the conductivity or resistance of the semiconductor. Such simulation results may be used to fabricate semiconductor devices, e.g., integrated circuits. As another example, in some cases the electronic structure Hamiltonian may characterize a catalyst. In these cases simulating the physical system may include simulating properties of the catalyst, e.g., simulating catalytic activity. Such simulation results may be used to fabricate catalysts, e.g., electrocatalysts or biocatalysts.

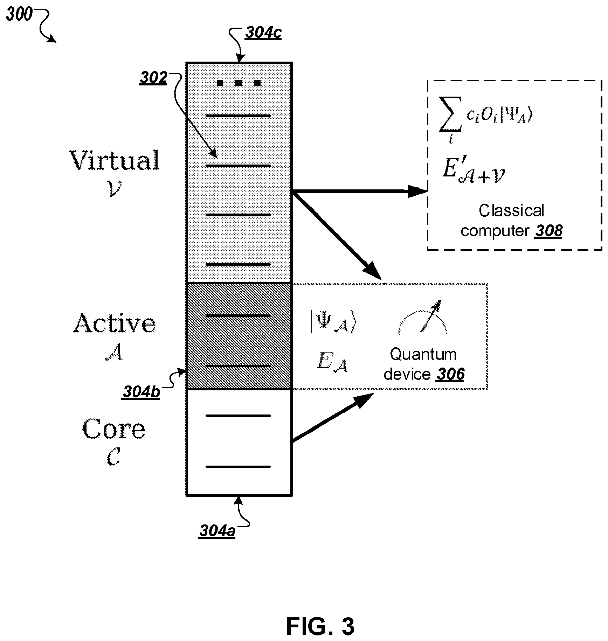

FIG. 3 is a schematic diagram 300 of the presently described virtual quantum subspace expansion techniques for quantum simulation of a quantum system, e.g., steps 202 - 210 of example process 200 described above.

As described above with reference to step 202 of example process, the techniques separate the orbitals (e.g., including orbital 102) of the quantum system into their core components 104a, active components 104b, and virtual components 104c.

As described above with reference to steps 204-208 of example process 200, a quantum computing device 106 simulates the quantum system (i.e., the state of the quantum system represented by a wavefunction) within the active space. Additional measurements are taken within this space. A classical computer 108 combines these additional measurements with classical post-processing from data on the virtual space 104c to improve the simulation using no additional qubits or circuit depth.

As described above with reference to steps 210-212 of example process 200, a resulting improved simulated

wavefunction(s) can be stored in a mixed quantum-classical representation that may be used to derive target properties of the wavefunction(s).

*Programming the hardware: Cumulant and restricted active space approximations*

In some implementations one or more approximations can be introduced into the example process 200 described above to improve tractability.

One example approximation includes the division of the active space $\mathcal{A}$ into a first part $\mathcal{A}_v$ which is excited into the virtual space V, and a second part $\mathcal{A}_c$ of the active space which can be treated as correlated core orbitals. That is, in some implementations the system can perform example process 200 of FIG. 2 with $\mathcal{A}$ = $\mathcal{A}_v$. Dividing the active space in this manner reduces the scaling in the number of measurements required to determine the matrices *H* and *S to* the original cost of computing the eigenvalues plus the size of the first part $\mathcal{A}_v$,

$$N_{\mathcal{A}_v}^8,$$

which for small sizes of $\mathcal{A}_v$ can reduce the cost significantly.

Another approximation includes estimating matrix elements of reduced density matrices (RDMs) via cumulant approximations or ensemble variational methods. For example, a series of approximations to a 4-RDM, e.g., as the 4-RDM defined in Equation (6), can be formed using products of lower RDMs and perturbative corrections. Such truncations can reduce the required number of terms to measure back to the number of active space orbitals $N_A^4$, but introduces some approximation to the target observable (e.g., energetic) values. An alternative is to stochastically sample the elements of the approximation to the 4-RDM to measure with increasing degrees of accuracy as time proceeds within a calculation.

*Programming the hardware: an example process for simulating a quantum system using full space orbital relaxation*

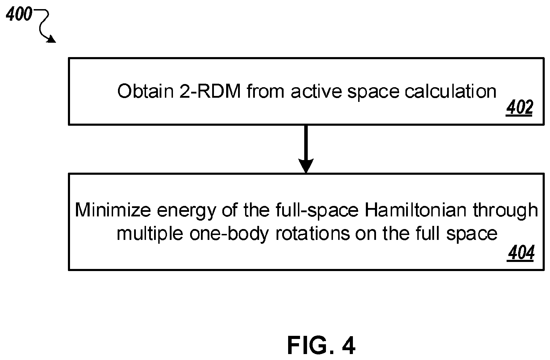

FIG. 4 is a flow diagram of an example process 400, not covered by the claims, for simulating a quantum system characterized a respective Hamiltonian using full space orbital relaxation. For convenience, the process 400 will be described as being performed by a system of one or more classical and quantum computing devices located in one or more locations. For example, a quantum computation system, e.g., the system 100 of FIG. 1, appropriately programmed in accordance with this specification, can perform the process 400.

The system obtains a simulation output from a quantum simulation of the quantum system (step 402). The quantum simulation can be a quantum simulation in active space, e.g., a quantum simulation performed using the active space approximation. The simulation output can be an estimated energy of the quantum system, e.g., an estimated energy associated with the Hamiltonian in active space. For example, in some implementations the Hamiltonian characterizing the quantum system can be an electronic structure Hamiltonian, as given by Equation (1) above. In these implementations the simulation output may include a 2-RDM from the ground state of a corresponding active-space Hamiltonian (the Hamiltonian that results from integrating out the virtual and core degrees of freedom). The system can obtain the simulation output from an active space method such as complete active space configuration interaction (CAS-CI), multi-configuration self-consistent field methods (MCSCF), density matrix renormalization group (DMRG), quantum Monte Carlo (QMC), or more generally from any method that outputs a 2-RDM (or N-representable 2-RDM).

The system performs a classical computation to adjust the simulation output using multiple single-particle rotations *U* in the full space to obtain an estimated energy of the quantum system characterized by the respective Hamiltonian (i.e., the Hamiltonian in full space) (step 404). Because of Thouless's theorem, the multiple single-particle rotations *U* can be efficiently implemented as a rotation of the underlying basis of the Hamiltonian (in full space), e.g., $Ua_j^\dagger U^\dagger$. This rotation of the underlying basis can be formulated as a nonlinear optimization problem. The nonlinear optimization problem follows the variational principle of quantum mechanics by minimizing an objective function that is based on the expected value of the energy for a measured 2-RDM with respect to multiple constraints (unitary rotations of the orbitals) that ensure the wavefunctions remain normalized, physical, and a one-body fermionic rotation. The constraints also ensure that the equations are efficient to evaluate classically once the 2-RDM is known. The nonlinear optimization problem can be given by Equation (8) below.

$$\min_U \left( \sum_{ij} u_{i,i'} u^*_{j,j'} h_{ij} \langle a^\dagger_i a_j \rangle_{\mathcal{A}} + \sum_{ijkl} u_{i,i'} u_{j,j'} u^*_{k,k'} u^*_{l,l'} h_{ijkl} \langle a^\dagger_i a^\dagger_j a_k a_l \rangle_{\mathcal{A}} \right)$$

subject to

$$U a^\dagger_j U^\dagger = \sum_{j'} u_{j,j'} a^\dagger_{j'}, \qquad U^\dagger U = \mathbb{I} \qquad (8)$$

In Equation (8), *U* represents a unitary transformation that rotates the underlying basis, i.e., the multiple single-particle rotations, $u_{i,i'}$ are representations of *U* in the underlying basis (e.g., $u_{i,i'}$ is the i-i' th entry of a matrix representation of *U*), $h_{ij}$ and $h_{ijkl}$ are as defined in Equation (1) above, and

$$\langle a^\dagger_i a^\dagger_j a_k a_l \rangle_{\mathcal{A}}$$

and

$$\langle a^\dagger_i a_j \rangle_{\mathcal{A}}$$

represent the 2- and 1-RDM of the ground state active space wavefunction (which can be obtained at step 402). In some implementations the system can solve the nonlinear optimization problem by implementing a second order approximation of *u*, e.g., $u = e^t \approx \mathbb{I} + t + \frac{1}{2} t^2$ .

In some implementations the system can solve the nonlinear optimization problem given by Equation (8) by parameterizing the unitary transformation U as an exponentiated anti-Hermitian matrix. For example, the system can set

$$U = e^X$$

$$\text{with } X = \sum_{p,q} t_{p,q} a^\dagger_p a_q$$

$$\text{where } t_{p,q} = -t^*_{q,p} \qquad (9)$$

In Equation (9), *X* represents a generator of the unitary *U* and is an anti-Hermitian matrix.

In other implementations the system can parametrize the unitary *U* using Givens rotations. This parametrization uses a set of angles $\{\theta\}$ associated with the set of nonredundant orbital rotation generators. For 2-RDMs obtained from an exact diagonalization of the active-space Hamiltonian, the only non-redundant parameters are single-particle generators associated with pairs of orbitals involving rotations from the active space to the virtual space and active space to the core space. Therefore, the unitary *U* in Equation (8) can be expressed as a product of Givens matrices:

$$U = \prod_{i \in active} \prod_{b \in core, virtual} G_{i,b}(\theta_{i,b}) \qquad (10)$$

The optimal rotation of a single angle with respect to the input 2-RDM, one-, and two-electron integrals and a sweep procedure to find an energy minimizing *U* can be computed using known techniques, e.g., using multi-configurational self-consistent-field method (MCSF) methods for ground and excited states based on full optimizations of successive Jacobi rotations.

In some implementations the system can iterate between solving the active-space Schrödinger equation (step 402) and full-space single-particle rotations (404), e.g., iteratively perform example process 400. When the system iteratively performs example process 400, at the end of each iteration a new basis determined by minimizing the expected value of the Hamiltonian with respect to unitary rotations of the orbitals (determined by solving Equation 8 above) is used as an input for solving the active-space Schrödinger equation in a subsequent iteration. The iterative process can stop when a change in energy between iterations is lower than a predetermined threshold. In other implementations the system can perform a single orbital-relaxation procedure (step 404) once as a post-processing step.

Because of the variational principle, relaxing the orbitals in a single step as post-processing is guaranteed to reduce the energy. Furthermore, if the ground state of the active space is not achieved due to an approximate wave-function ansatz, the system can include additional single-particle orbital rotations between orbital pairs inside the active space in the relaxation. Including these rotations would correspond to an additional linear depth circuit that would have been executed perfectly on the quantum computer at step 402. However, any circuit that contains single-particle rotations at the end of the circuit can be made shorter by replacing the single particle rotations at the end of the circuit with a classical post-processing step based on single particle rotations as described above (e.g., within the active space and not the full space).

In some implementations example process 400 can be combined with one or more techniques described above with reference to example process 200. For example, step 402 may be performed using the techniques described at steps 202-208 of example process 200, where the contraction of the expansion operators that act on the virtual space via classical pre-computation in example process 200 (as described in steps 206 and 208) can be replaced with orbital relaxation via classical post processing (step 404). Steps 210 and 212 of FIG. 3 can then be performed.

Implementations of the digital and/or quantum subject matter and the digital functional operations and quantum operations described in this specification can be implemented in digital electronic circuitry, suitable quantum circuitry or, more generally, quantum computational systems, in tangibly-embodied digital and/or quantum computer software or firmware, in digital and/or quantum computer hardware, including the structures disclosed in this specification and their structural equivalents, or in combinations of one or more of them. The term "quantum computational systems" may include, but is not limited to, quantum computers, quantum information processing systems, quantum cryptography systems, or quantum simulators.

Implementations of the digital and/or quantum subject matter described in this specification can be implemented as one or more digital and/or quantum computer programs, i.e., one or more modules of digital and/or quantum computer program instructions encoded on a tangible non-transitory storage medium for execution by, or to control the operation of, data processing apparatus. The digital and/or quantum computer storage medium can be a machine-readable storage device, a machine-readable storage substrate, a random or serial access memory device, one or more qubits, or a combination of one or more of them. Alternatively or in addition, the program instructions can be encoded on an artificially-generated propagated signal that is capable of encoding digital and/or quantum information, e.g., a machine-generated electrical, optical, or electromagnetic signal, that is generated to encode digital and/or quantum information for transmission to suitable receiver apparatus for execution by a data processing apparatus.

The terms quantum information and quantum data refer to information or data that is carried by, held or stored in quantum systems, where the smallest non-trivial system is a qubit, i.e., a system that defines the unit of quantum information. It is understood that the term "qubit" encompasses all quantum systems that may be suitably approximated as a two-level system in the corresponding context. Such quantum systems may include multi-level systems, e.g., with two or more levels. By way of example, such systems can include atoms, electrons, photons, ions or superconducting qubits. In many implementations the computational basis states are identified with the ground and first excited states, however it is understood that other setups where the computational states are identified with higher level excited states are possible.

The term "data processing apparatus" refers to digital and/or quantum data processing hardware and encompasses all kinds of apparatus, devices, and machines for processing digital and/or quantum data, including by way of example a programmable digital processor, a programmable quantum processor, a digital computer, a quantum computer, multiple digital and quantum processors or computers, and combinations thereof. The apparatus can also be, or further include, special purpose logic circuitry, e.g., an FPGA (field programmable gate array), an ASIC (application-specific integrated circuit), or a quantum simulator, i.e., a quantum data processing apparatus that is designed to simulate or produce information about a specific quantum system. In particular, a quantum simulator is a special purpose quantum computer that does not have the capability to perform universal quantum computation. The apparatus can optionally include, in addition to hardware, code that creates an execution environment for digital and/or quantum computer programs, e.g., code that constitutes processor firmware, a protocol stack, a database management system, an operating system, or a combination of one or more of them.

A digital computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a digital computing environment. A quantum computer program, which may also be referred to or described as a program, software, a software application, a module, a software module, a script, or code, can be written in any form of programming language, including compiled or interpreted languages, or declarative or procedural languages, and translated into a suitable quantum programming language, or can be written in a quantum programming language, e.g., QCL or Quipper.

A digital and/or quantum computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or

more modules, sub-programs, or portions of code. A digital and/or quantum computer program can be deployed to be executed on one digital or one quantum computer or on multiple digital and/or quantum computers that are located at one site or distributed across multiple sites and interconnected by a digital and/or quantum data communication network. A quantum data communication network is understood to be a network that may transmit quantum data using quantum systems, e.g. qubits. Generally, a digital data communication network cannot transmit quantum data, however a quantum data communication network may transmit both quantum data and digital data.

The processes and logic flows described in this specification can be performed by one or more programmable digital and/or quantum computers, operating with one or more digital and/or quantum processors, as appropriate, executing one or more digital and/or quantum computer programs to perform functions by operating on input digital and quantum data and generating output. The processes and logic flows can also be performed by, and apparatus can also be implemented as, special purpose logic circuitry, e.g., an FPGA or an ASIC, or a quantum simulator, or by a combination of special purpose logic circuitry or quantum simulators and one or more programmed digital and/or quantum computers.

For a system of one or more digital and/or quantum computers to be "configured to" perform particular operations or actions means that the system has installed on it software, firmware, hardware, or a combination of them that in operation cause the system to perform the operations or actions. For one or more digital and/or quantum computer programs to be configured to perform particular operations or actions means that the one or more programs include instructions that, when executed by digital and/or quantum data processing apparatus, cause the apparatus to perform the operations or actions. A quantum computer may receive instructions from a digital computer that, when executed by the quantum computing apparatus, cause the apparatus to perform the operations or actions.

Digital and/or quantum computers suitable for the execution of a digital and/or quantum computer program can be based on general or special purpose digital and/or quantum processors or both, or any other kind of central digital and/or quantum processing unit. Generally, a central digital and/or quantum processing unit will receive instructions and digital and/or quantum data from a read-only memory, a random access memory, or quantum systems suitable for transmitting quantum data, e.g. photons, or combinations thereof.

The elements of a digital and/or quantum computer include a central processing unit for performing or executing instructions and one or more memory devices for storing instructions and digital and/or quantum data. The central processing unit and the memory can be supplemented by, or incorporated in, special purpose logic circuitry or quantum simulators. Generally, a digital and/or quantum computer will also include, or be operatively coupled to receive digital and/or quantum data from or transfer digital and/or quantum data to, or both, one or more mass storage devices for storing digital and/or quantum data, e.g., magnetic, magneto-optical disks, optical disks, or quantum systems suitable for storing quantum information. However, a digital and/or quantum computer need not have such devices.

Digital and/or quantum computer-readable media suitable for storing digital and/or quantum computer program instructions and digital and/or quantum data include all forms of non-volatile digital and/or quantum memory, media and memory devices, including by way of example semiconductor memory devices, e.g., EPROM, EEPROM, and flash memory devices; magnetic disks, e.g., internal hard disks or removable disks; magneto-optical disks; CD-ROM and DVD-ROM disks; and quantum systems, e.g., trapped atoms or electrons. It is understood that quantum memories are devices that can store quantum data for a long time with high fidelity and efficiency, e.g., light-matter interfaces where light is used for transmission and matter for storing and preserving the quantum features of quantum data such as superposition or quantum coherence.

Control of the various systems described in this specification, or portions of them, can be implemented in a digital and/or quantum computer program product that includes instructions that are stored on one or more non-transitory machine-readable storage media, and that are executable on one or more digital and/or quantum processing devices. The systems described in this specification, or portions of them, can each be implemented as an apparatus, method, or system that may include one or more digital and/or quantum processing devices and memory to store executable instructions to perform the operations described in this specification.

While this specification contains many specific implementation details, these should not be construed as limitations on the scope of protection defined by the claims, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the implementations described above should not be understood as requiring such separation in all implementations, and it should be understood that the described program components and systems can generally be integrated together in a single software product or packaged into multiple software products.

Particular implementations of the subject matter have been described. Other implementations are within the scope of the following claims. In some cases, multitasking and parallel processing may be advantageous.

## Claims

1. A method for quantum simulation of a physical system **characterized by** a respective Hamiltonian, the method comprising:

    selecting (202), by one or more classical processors, a first set of basis functions for the simulation, wherein the first set of basis functions comprises i) an active set of orbitals, and ii) a virtual set of orbitals, wherein the virtual set of orbitals are higher in energy than the active set of orbitals;
    defining (204), by the one or more classical processors, a set of expansion operators for the simulation, wherein expansion operators in the set of expansion operators approximate fermionic excitations in an active space spanned by the active set of orbitals and a virtual space spanned by the virtual set of orbitals;
    performing (206) multiple quantum computations to determine a matrix representation of the Hamiltonian in a second set of basis functions, wherein each basis function in the second set of basis functions comprises a respective expansion operator applied to a wavefunction prepared in the active space, and wherein determining the matrix representation of the Hamiltonian comprises, for each of one or more of the matrix elements:

        determining, by the one or more classical processors, that the matrix element comprises operators that act on the virtual space,
        performing, by the one or more classical processors, a classical computation to contract the matrix element to a matrix element comprising operators that act on the active space only by applying Wick's theorem, and
        measuring, by a quantum computing device, the operators that act on the active space only to determine a value for the matrix element;

    computing (210), by the one or more classical processors, eigenvalues and eigenvectors of the Hamiltonian by using the determined matrix representation of the Hamiltonian in the second set of basis functions; and
    determining (212), by the one or more classical processors, physical properties of the physical system using the computed eigenvalues and eigenvectors.

2. The method of claim 1, further comprising performing (208) multiple computations to determine an overlap matrix in the second set of basis functions, wherein each element of the overlap matrix represents a respective overlap of two basis functions in the second set of basis functions, wherein determining the overlap matrix comprises, for each of one or more of the **one or more** matrix elements:

    determining, by the one or more classical processors, that the matrix element comprises operators that act on the virtual space or operators that act on the active space;
    performing, by the one or more classical processors, a classical computation to contract the matrix element to a matrix element comprising operators that act on the active space only, by applying Wick's theorem; and
    measuring, by the quantum computing device, the operators that act on the active space only to determine a value for the matrix element.

3. The method of claim 2, wherein computing, by the one or more classical processors, the eigenvalues and eigenvectors of the Hamiltonian by using the determined matrix representation of the Hamiltonian in the second set of basis functions comprises:
computing the eigenvalues and eigenvectors of the Hamiltonian by using the determined matrix representation of the Hamiltonian in the second set of basis functions and the determined overlap matrix.

4. The method of claim 1 or claim 2, wherein measuring, by the quantum computing device, the operators that act on the active space only to determine the value for the matrix element comprises:

    preparing the wavefunction in the active space; and
    measuring a Pauli operator corresponding to a qubit transformation of the matrix element.

5. The method of any one of claims 2 to 4, further comprising, before computing, by the one or more classical processors, the eigenvalues and eigenvectors of the Hamiltonian:

computing, by the one or more classical processors, eigenvalues and eigenvectors of the determined overlap matrix;
removing, by the one or more classical processors, eigenvalues of the determined overlap matrix that are equal to zero or smaller than a predetermined threshold to define an updated overlap matrix; and
using the updated overlap matrix, by the one or more classical processors, to compute the eigenvalues and eigenvectors of the Hamiltonian.

**6.** The method of any one of claims 1 to 5, wherein the first set of basis functions further comprises a core set of orbitals.

**7.** The method of any one of claims 1 to 6, wherein defining, by the one or more classical processors, the set of expansion operators for the simulation further comprises selecting a maximum excitation level for the set of expansion operators.

**8.** The method of any one of claims 1 to 7, wherein the active space comprises a subspace of total active space that is excited into the virtual space.

**9.** The method of any one of claims 1 to 8, wherein measuring, by the quantum computing device, the operators that act on the active space only to determine a value for the matrix element comprises:

approximating the operators that act on the active space only using cumulant approximations or ensemble variational methods; and
measuring the approximated operators that act on the active space only.

**10.** The method of claim 1, wherein the Hamiltonian characterizes the electronic structure of a semiconductor.

**11.** An apparatus comprising:

quantum hardware (102) comprising a quantum computing device; and
one or more classical processors (104);
wherein the apparatus is configured to perform a method according to any one of claims 1 to 10.

**Patentansprüche**

**1.** Verfahren zur Quantensimulation eines physikalischen Systems, das durch einen entsprechenden Hamilton-Operator gekennzeichnet ist, wobei das Verfahren Folgendes umfasst:

Auswählen (202), durch einen oder mehrere klassische Prozessoren, eines ersten Satzes von Basisfunktionen für die Simulation, wobei der erste Satz von Basisfunktionen i) einen aktiven Satz von Orbitalen und ii) einen virtuellen Satz von Orbitalen umfasst, wobei der virtuelle Satz von Orbitalen eine höhere Energie aufweist als der aktive Satz von Orbitalen;
Definieren (204), durch den einen oder die mehreren klassischen Prozessoren, eines Satzes von Entwicklungsoperatoren für die Simulation, wobei Entwicklungsoperatoren in dem Satz von Entwicklungsoperatoren fermionische Anregungen in einem aktiven Raum, der durch den aktiven Satz von Orbitalen aufgespannt wird, und einem virtuellen Raum, der durch den virtuellen Satz von Orbitalen aufgespannt wird, annähern;
Durchführen (206) von mehreren Quantenberechnungen, um eine Matrixdarstellung des Hamilton-Operators in einem zweiten Satz von Basisfunktionen zu bestimmen, wobei jede Basisfunktion in dem zweiten Satz von Basisfunktionen einen entsprechenden Entwicklungsoperator umfasst, der auf eine in dem aktiven Raum präparierte Wellenfunktion angewendet wird, und wobei das Bestimmen der Matrixdarstellung des Hamilton-Operators für jedes von einem oder mehreren der Matrixelemente Folgendes umfasst:

Bestimmen, durch den einen oder die mehreren klassischen Prozessoren, dass das Matrixelement Operatoren umfasst, die auf den virtuellen Raum wirken,
Durchführen, durch den einen oder die mehreren klassischen Prozessoren, einer klassischen Berechnung, um das Matrixelement auf ein Matrixelement zu kontrahieren, das Operatoren umfasst, die nur auf den aktiven Raum wirken, durch Anwenden des Wick-Theorems, und
Messen, durch eine Quantenrechenvorrichtung, der Operatoren, die nur auf den aktiven Raum wirken, um einen Wert für das Matrixelement zu bestimmen;
Berechnen (210), durch den einen oder die mehreren klassischen Prozessoren, von Eigenwerten und

Eigenvektoren des Hamilton-Operators durch Verwenden der bestimmten Matrixdarstellung des Hamilton-Operators in dem zweiten Satz von Basisfunktionen; und
Bestimmen (212), durch den einen oder die mehreren klassischen Prozessoren, von physikalischen Eigenschaften des physikalischen Systems unter Verwendung der berechneten Eigenwerte und Eigenvektoren.

2. Verfahren nach Anspruch 1, ferner umfassend das Durchführen (208) von mehreren Berechnungen, um eine Überlappungsmatrix in dem zweiten Satz von Basisfunktionen zu bestimmen, wobei jedes Element der Überlappungsmatrix eine entsprechende Überlappung von zwei Basisfunktionen in dem zweiten Satz von Basisfunktionen darstellt, wobei das Bestimmen der Überlappungsmatrix für jedes von einem oder mehreren des **einen oder der mehreren** Matrixelemente Folgendes umfasst:

   Bestimmen, durch den einen oder die mehreren klassischen Prozessoren, dass das Matrixelement Operatoren umfasst, die auf den virtuellen Raum wirken, oder Operatoren, die auf den aktiven Raum wirken;
   Durchführen, durch den einen oder die mehreren klassischen Prozessoren, einer klassischen Berechnung, um das Matrixelement auf ein Matrixelement zu kontrahieren, das Operatoren umfasst, die nur auf den aktiven Raum wirken, durch Anwenden des Wick-Theorems; und
   Messen, durch die Quantenrechenvorrichtung, der Operatoren, die nur auf den aktiven Raum wirken, um einen Wert für das Matrixelement zu bestimmen.

3. Verfahren nach Anspruch 2, wobei das Berechnen, durch den einen oder die mehreren klassischen Prozessoren, der Eigenwerte und Eigenvektoren des Hamilton-Operators durch Verwenden der bestimmten Matrixdarstellung des Hamilton-Operators in dem zweiten Satz von Basisfunktionen Folgendes umfasst:
Berechnen der Eigenwerte und Eigenvektoren des Hamilton-Operators durch Verwenden der bestimmten Matrixdarstellung des Hamilton-Operators in dem zweiten Satz von Basisfunktionen und der bestimmten Überlappungsmatrix.

4. Verfahren nach Anspruch 1 oder Anspruch 2, wobei das Messen, durch die Quantenrechenvorrichtung, der Operatoren, die nur auf den aktiven Raum wirken, um den Wert für das Matrixelement zu bestimmen, Folgendes umfasst:

   Präparieren der Wellenfunktion in dem aktiven Raum; und
   Messen eines Pauli-Operators, der einer Qubit-Transformation des Matrixelements entspricht.

5. Verfahren nach einem der Ansprüche 2 bis 4, ferner umfassend, vor dem Berechnen, durch den einen oder die mehreren klassischen Prozessoren, der Eigenwerte und Eigenvektoren des Hamilton-Operators:

   Berechnen, durch den einen oder die mehreren klassischen Prozessoren, von Eigenwerten und Eigenvektoren der bestimmten Überlappungsmatrix;
   Entfernen, durch den einen oder die mehreren klassischen Prozessoren, von Eigenwerten der bestimmten Überlappungsmatrix, die gleich null oder kleiner als ein vorbestimmter Schwellenwert sind, um eine aktualisierte Überlappungsmatrix zu definieren; und
   Verwenden der aktualisierten Überlappungsmatrix, durch den einen oder die mehreren klassischen Prozessoren, um die Eigenwerte und Eigenvektoren des Hamilton-Operators zu berechnen.

6. Verfahren nach einem der Ansprüche 1 bis 5, wobei der erste Satz von Basisfunktionen ferner einen Kernsatz von Orbitalen umfasst.

7. Verfahren nach einem der Ansprüche 1 bis 6, wobei das Definieren, durch den einen oder die mehreren klassischen Prozessoren, des Satzes von Entwicklungsoperatoren für die Simulation ferner das Auswählen eines maximalen Anregungsniveaus für den Satz von Entwicklungsoperatoren umfasst.

8. Verfahren nach einem der Ansprüche 1 bis 7, wobei der aktive Raum einen Unterraum von gesamtem aktivem Raum umfasst, der in den virtuellen Raum angeregt wird.

9. Verfahren nach einem der Ansprüche 1 bis 8, wobei das Messen, durch die Quantenrechenvorrichtung, der Operatoren, die nur auf den aktiven Raum wirken, um einen Wert für das Matrixelement zu bestimmen, Folgendes umfasst:

Annähern der Operatoren, die nur auf den aktiven Raum wirken, unter Verwendung von Kumulanten-Näherungen oder Ensemble-Variationsmethoden; und
Messen der angenäherten Operatoren, die nur auf den aktiven Raum wirken.

**10.** Verfahren nach Anspruch 1, wobei der Hamilton-Operator die elektronische Struktur eines Halbleiters kennzeichnet.

**11.** Einrichtung, umfassend:

Quantenhardware (102), umfassend eine Quantenrechenvorrichtung; und
einen oder mehrere klassische Prozessoren (104);
wobei die Einrichtung konfiguriert ist, um ein Verfahren nach einem der Ansprüche 1 bis 10 durchzuführen.

## Revendications

**1.** Procédé de simulation quantique d'un système physique **caractérisé par** un hamiltonien respectif, le procédé comprenant :

la sélection (202), par un ou plusieurs processeurs classiques, d'un premier ensemble de fonctions de base pour la simulation, dans lequel le premier ensemble de fonctions de base comprend i) un ensemble actif d'orbitales, et ii) un ensemble virtuel d'orbitales, dans lequel l'ensemble virtuel d'orbitales est plus élevé en énergie que l'ensemble actif d'orbitales ;
la définition (204), par les un ou plusieurs processeurs classiques, d'un ensemble d'opérateurs d'expansion pour la simulation, dans lequel les opérateurs d'expansion dans l'ensemble d'opérateurs d'expansion approximent des excitations fermioniques dans un espace actif couvert par l'ensemble actif d'orbitales et un espace virtuel couvert par l'ensemble virtuel d'orbitales ;
la réalisation (206) de multiples calculs quantiques pour déterminer une représentation matricielle de l'hamiltonien dans un second ensemble de fonctions de base, dans lequel chaque fonction de base du second ensemble de fonctions de base comprend un opérateur d'expansion respectif appliqué à une fonction d'onde préparée dans l'espace actif, et dans lequel la détermination de la représentation matricielle de l'hamiltonien comprend, pour chacun d'un ou de plusieurs des éléments de matrice :

la détermination, par les un ou plusieurs processeurs classiques, que l'élément de matrice comprend des opérateurs qui agissent sur l'espace virtuel,
la réalisation, par les un ou plusieurs processeurs classiques, d'un calcul classique pour contracter l'élément de matrice en un élément de matrice comprenant des opérateurs qui agissent sur l'espace actif uniquement en appliquant le théorème de Wick, et la mesure, par un dispositif de calcul quantique, des opérateurs qui agissent sur l'espace actif uniquement pour déterminer une valeur pour l'élément de matrice ;
le calcul (210), par les un ou plusieurs processeurs classiques, de valeurs propres et de vecteurs propres de l'hamiltonien à l'aide de la représentation matricielle déterminée de l'hamiltonien dans le second ensemble de fonctions de base ; et
la détermination (212), par les un ou plusieurs processeurs classiques, de propriétés physiques du système physique à l'aide des valeurs propres et des vecteurs propres calculés.

**2.** Procédé selon la revendication 1, comprenant en outre la réalisation (208) de calculs multiples pour déterminer une matrice de recouvrement dans le second ensemble de fonctions de base, dans lequel chaque élément de la matrice de recouvrement représente un recouvrement respectif de deux fonctions de base dans le second ensemble de fonctions de base, dans lequel la détermination de la matrice de recouvrement comprend, pour chacun d'un ou de plusieurs des **un ou plusieurs** éléments de matrice :

la détermination, par les un ou plusieurs processeurs classiques, que l'élément de matrice comprend des opérateurs qui agissent sur l'espace virtuel ou des opérateurs qui agissent sur l'espace actif ;
la réalisation, par les un ou plusieurs processeurs classiques, d'un calcul classique pour contracter l'élément de matrice en un élément de matrice comprenant des opérateurs qui agissent sur l'espace actif uniquement en appliquant le théorème de Wick ; et
la mesure, par le dispositif de calcul quantique, des opérateurs qui agissent sur l'espace actif uniquement pour déterminer une valeur pour l'élément de matrice.

3. Procédé selon la revendication 2, dans lequel le calcul, par les un ou plusieurs processeurs classiques, des valeurs propres et des vecteurs propres de l'hamiltonien à l'aide de la représentation matricielle déterminée de l'hamiltonien dans le second ensemble de fonctions de base comprend :
le calcul des valeurs propres et des vecteurs propres de l'hamiltonien à l'aide de la représentation matricielle déterminée de l'hamiltonien dans le second ensemble de fonctions de base et de la matrice de recouvrement déterminée.

4. Procédé selon la revendication 1 ou la revendication 2, dans lequel la mesure, par le dispositif de calcul quantique, des opérateurs qui agissent sur l'espace actif uniquement pour déterminer la valeur pour l'élément de matrice comprend :

la préparation de la fonction d'onde dans l'espace actif ; et
la mesure d'un opérateur de Pauli correspondant à une transformation de qubit de l'élément de matrice.

5. Procédé selon l'une quelconque des revendications 2 à 4, comprenant en outre, avant le calcul, par les un ou plusieurs processeurs classiques, des valeurs propres et des vecteurs propres de l'hamiltonien :

le calcul, par les un ou plusieurs processeurs classiques, de valeurs propres et de vecteurs propres de la matrice de recouvrement déterminée ;
la suppression, par les un ou plusieurs processeurs classiques, de valeurs propres de la matrice de recouvrement déterminée qui sont égales à zéro ou inférieures à un seuil prédéterminé afin de définir une matrice de recouvrement mise à jour ; et
l'utilisation de la matrice de recouvrement mise à jour, par les un ou plusieurs processeurs classiques, pour calculer les valeurs propres et les vecteurs propres de l'hamiltonien.

6. Procédé selon l'une quelconque des revendications 1 à 5, dans lequel le premier ensemble de fonctions de base comprend en outre un ensemble d'orbitales de cœur.

7. Procédé selon l'une quelconque des revendications 1 à 6, dans lequel la définition, par les un ou plusieurs processeurs classiques, de l'ensemble d'opérateurs d'expansion pour la simulation comprend en outre la sélection d'un niveau d'excitation maximal pour l'ensemble d'opérateurs d'expansion.

8. Procédé selon l'une quelconque des revendications 1 à 7, dans lequel l'espace actif comprend un sous-espace de l'espace actif total qui est excité dans l'espace virtuel.

9. Procédé selon l'une quelconque des revendications 1 à 8, dans lequel la mesure, par le dispositif de calcul quantique, des opérateurs qui agissent sur l'espace actif uniquement pour déterminer une valeur pour l'élément de matrice comprend :

l'approximation des opérateurs qui agissent sur l'espace actif uniquement à l'aide d'approximations de cumulants ou de méthodes variationnelles d'ensemble ; et
la mesure des opérateurs approximés qui agissent sur l'espace actif uniquement.

10. Procédé selon la revendication 1, dans lequel l'hamiltonien caractérise la structure électronique d'un semi-conducteur.

11. Appareil comprenant :

un matériel quantique (102) comprenant un dispositif de calcul quantique ; et
un ou plusieurs processeurs classiques (104) ;
dans lequel l'appareil est configuré pour réaliser un procédé selon l'une quelconque des revendications 1 à 10.

Output data representing simulation results, e.g., semiconductor conductivity 108
System 100
Quantum hardware 102
Qubits 110
Control devices 112
Classical Processors 104
Input data representing physical system, e.g., semiconductor 106

FIG. 1

200
Select first set of basis functions, wherein basis functions include virtual and active orbitals 202
Define expansion operators that approximate fermionic excitations in active space and virtual space 204
Perform quantum computations to determine matrix representation of Hamiltonian, where operators acting on virtual space are contracted via classical computation before measurement 206
Perform quantum computations to determine overlap matrix, where operators acting on virtual space are contracted via classical computation before measurement 208
Compute eigenvalues of Hamiltonian 210
Determine properties of physical system 212

FIG. 2

300
304c
302
Virtual
$\mathcal{V}$
$\sum_i c_i O_i |\Psi_A\rangle$
$E'_{\mathcal{A}+\mathcal{V}}$
Classical computer 308
Active
$\mathcal{A}$
$|\Psi_{\mathcal{A}}\rangle$
$E_{\mathcal{A}}$
Quantum device 306
304b
Core
$\mathcal{C}$
304a

FIG. 3

400
Obtain 2-RDM from active space calculation
402
Minimize energy of the full-space Hamiltonian through multiple one-body rotations on the full space
404

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **J. R. MCCLEAN et al.** Hybrid Quantum-Classical Hierarchy for Mitigation of Decoherence and Determination of Excited States. *PRA*, 2017, vol. 95
- **J. I. COLLESS et al.** Computation of Molecular Spectra on a Quantum Processor with an Error-Resilient Algorithm. *PRX*, 2018, vol. 8